# EUROPEAN PATENT APPLICATION

(11) **EP 1 852 771 A2**
(43) Date of publication of application: **07.11.2007**
(21) Application number: 07008951.1
(22) Date of filing: 03.05.2007
(51) Int. Cl.: G06F 3/033

(54) **Mobile communication terminal and method of processing key signal**

(30) Priority: 03.05.2006 KR 20060040013
(71) Applicant: LG Electronics Inc., Yongdungpo-gu Seoul 150-010 (KR)
(72) Inventor: Lim, Sang Yeon, Seongnam-si Gyeonggi-do (KR); Park, Yeon Woo, Seocho-gu Seoul (KR); Oh, Young Suk, Seo-gu Daejeon-si (KR)
(74) Representative: Katérle, Axel

(57) **Abstract**

A mobile communication terminal and method of processing a key signal thereof are provided, by which both a function of a touch type key button and a function of a touch wheel may be performed in one area on a touch panel. The present invention includes recognizing a touch on the touch panel and generating a first key signal based on the movement of the touched position if a touched position of the touch panel is moved by maintaining the touch and generating a numeral key signal corresponding to the touched position if the touch is made on one point on the touch panel which displays a numeral key.

## Description

This application claims the benefit of the Korean Patent Application No. 10-2006-0040013, filed on May 3, 2006, which is hereby incorporated by reference as if fully set forth herein.

### FIELD OF THE INVENTION

The present invention is directed to a mobile communication terminal, and more particularly, to a mobile communication terminal and method of processing a key signal. Although the present invention is suitable for a wide scope of applications, it is particularly suitable for processing a key signal in a mobile communication terminal provided with a touch panel.

### DESCRIPTION OF THE RELATED ART

A mobile communication terminal is generally equipped with a button type keypad as an input device. Specifically, the button type keypad is provided with a numeral key, a character key, a function key such as a menu key, a delete key, and a camera driving key for performing a specific function. The mobile communication terminal may also have a direction key, such as a button-type 4-direction key or a touch wheel.

However, a mobile communication terminal provided with both function and direction keys does not have a compact size since the function or direction key for performing the specific function needs an area separately provided for the corresponding function.

### SUMMARY OF THE INVENTION

An object of the present invention is to provide a mobile communication terminal and method of processing a key signal by which functions of both a touch-type key button and a touch wheel may be provided in one area on a touch panel.

In one aspect of the present invention, a method of processing a key input in a mobile communication terminal is provided. The method includes receiving a touch on a touch panel and processing the received touch as a first input if the received touch is movement over the touch panel while maintaining the touch and processing the received touch as a second input if the received touched is a non-moving touch to a specific location on the touch panel, wherein the first input is based on the movement of the received touch and the second input is based on the specific location on the touch panel.

It is contemplated that processing the received touch as the first input includes generating a first key signal and processing the received touch as the second input includes generating a second key signal. It is further contemplated that the second input corresponds to a numeral key on the touch panel.

It is contemplated that processing the received touch as the first input includes at least one of moving an indicator on a display, adjusting volume of an audio signal and reproducing data. It is further contemplated that moving the indicator includes at least one of moving the indicator in a straight manner, moving the indicator in a curved manner, rotating the indicator, and replacing an existing displayed image with a new image.

It is contemplated that the method further includes generating light from a light-emitting device corresponding to a position on the touch panel at which the touch is received. It is further contemplated that the method further includes adjusting a brightness of the light-emitting device according to a pressure of the received touch.

It is contemplated that the method further includes generating light from a plurality of light-emitting devices if the received touched is movement over the touch panel while maintaining the touch, the light generated from the plurality of light-emitting devices in succession according to movement of the received touch. It is further contemplated that generating light from the plurality of light-emitting devices is performed according to at least one of instantaneous luminescence and delayed luminescence.

It is contemplated that the method further includes processing the received touch as the first input according to an input mode. It is further contemplated that the method further includes processing the received touch as the second input according to an input mode.

In another aspect of the present invention, a mobile communication terminal is provided. The mobile communication terminal includes a display unit outputting information, a touch panel receiving a touch and a control unit processing the received touch as a first input if the received touch is movement over the touch panel while maintaining the touch and processing the received touch as a second input if the received touched is a non-moving touch to a specific location on the touch panel, wherein the first input is based on the movement of the received touch and the second input is based on the specific location on the touch panel

It is contemplated that an area on the touch panel for receiving the first input is overlapped with an area on the touch panel for receiving the second input. It is further contemplated that the control unit processes the first input by generating a first key signal and the control unit processes the second input by generating a second key signal.

It is contemplated that the second input corresponds to a numeral key on the touch panel. It is further contemplated that the numeral key also functions as a character key.

It is contemplated that the control unit processes the received touch as a first input by at least one of moving of an indicator on the display, adjusting volume of an audio signal and reproducing data. It is further contemplated that the control unit moves the indicator by at least one of a moving the indicator in a straight manner, moving the indicator in a curved manner, rotating the indicator, and replacing an existing displayed image with a new image.

It is contemplated that the mobile communication terminal further includes a plurality of light-emitting devices on a lower surface of the touch panel and the control unit generates light from at least one of the plurality of light-emitting devices corresponding to a position on the touch panel at which the touch is received. It is further contemplated that the control unit adjusts a brightness of the at least one of the plurality of light-emitting devices according to a pressure of the received touch.

It is contemplated that the control unit sequentially generates light from at least two of the plurality of light-emitting devices according to movement of the received touch if the received touched is movement over the touch panel while maintaining the touch. It is further contemplated that generating light from the at least two of the plurality of light-emitting devices is performed according to at least one of instantaneous luminescence and delayed luminescence.

It is contemplated that the plurality of light-emitting devices are arranged in one of a circular configuration and a cross configuration. It is further contemplated that the touch panel includes a plurality of openings through which the plurality of light-emitting devices are externally exposed.

It is contemplated that the control unit processes the received touch as the second input according to an input mode. It is further contemplated that the control unit processes the received touch as the first input according to an input mode.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed. These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a flowchart of a method of processing a key signal in a mobile communication terminal according to one embodiment of the present invention.

FIG. 2 illustrates a block diagram of a mobile communication terminal according to one embodiment of the present invention.

FIG. 3 illustrates light-emitting devices aligned on a touch panel of the mobile communication terminal illustrated in FIG. 2.

FIGS. 4 and 5 illustrate inputting a key signal using the touch panel illustrated in FIG. 3.

FIG. 6 illustrates a diagram of a screen for inputting a key signal using the touch panel illustrated in FIG. 3.

FIG. 7 illustrates light-emitting devices aligned in a different manner on a touch panel of the mobile communication terminal illustrated in FIG. 2.

FIGS. 8 and 9 illustrate inputting a key signal using the touch panel illustrated in FIG. 7.

FIG. 10 illustrates a diagram of a screen for inputting a key signal using the touch panel illustrated in FIG. 7.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

A mobile communication terminal according to the present invention may be a portable electronic device. For example, a mobile communication terminal according to the present invention may be a mobile phone, a digital broadcast receiving terminal, an MP3 player, a PDA (personal digital assistants), or a PMP (portable multimedia player).

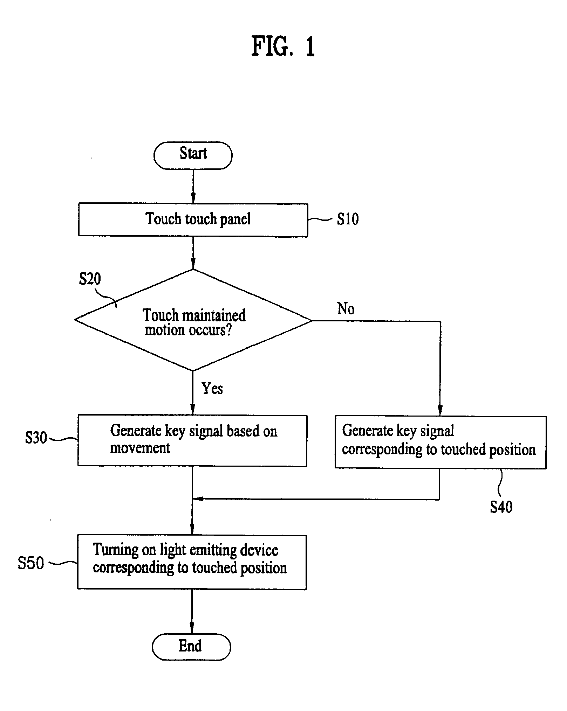

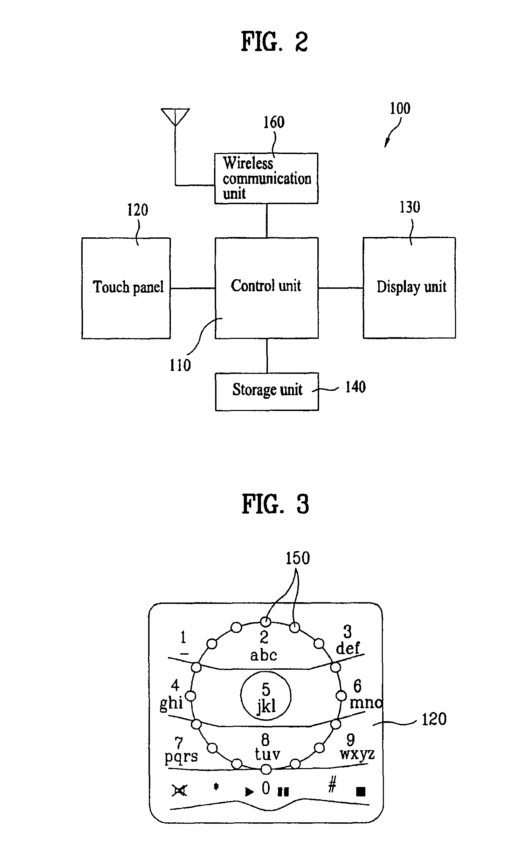

FIG. 1 illustrates a flowchart of a method of processing a key signal in a mobile communication terminal according to one embodiment of the present invention and FIG. 2 illustrates a block diagram of a mobile communication terminal to which the key signal processing method illustrated in FIG. 1 is applicable.

As illustrated in FIG. 2, the mobile communication terminal 100 includes a control unit 110, a touch panel 120, a display unit 130, a storage unit 140, and a wireless communication unit 160. The mobile communication terminal 100 illustrated in FIG. 2 is exemplary and is not intended to limit the various embodiments of the present invention. Specifically, some of the elements illustrated in FIG. 2 may be omitted or new elements may be added according to implementation of the present invention.

The touch panel 120 is touched (S10), for example using a pointing device. The pointing device is a tool for touching the touch panel 120 and may be a stylus pen or a finger.

The touch panel 120 is capable of detecting a touched position and a motion of a touch while the touch is maintained. The motion of the touch while the touch is maintained refers to the pointing device being moved without losing touch with the touch panel 120, and is hereinafter referred to as 'touch-maintained motion'.

A key signal may be generated according to whether a touch-maintained motion occurs on the touch panel 120 or the touch is simply made to a single point on the touch panel. Therefore, it is determined if a touch-maintained motion occurs (S20).

A first key signal is generated if a touch maintained motion occurs (S30). On the other hand, a second key signal corresponding to the touched position is generated (S40) if a touch to a single point on the touch panel 120 occurs.

According to one embodiment of the present invention, an area on the touch panel 120 for generating the first key signal may be overlapped with another area on the touch pane for generating the second key signal. In this way, space is conserved. A structure for generating the first key signal may be configured such that it is overlapped with a structure (not shown) for generating the second key signal in order to save space.

The first key signal may include a signal for directional movement of an indicator, a signal for volume adjustment of an output audio signal, or a signal for data reproduction. One of various functions may be matched to the first signal according to a current input mode.

The input mode refers to a mode for enabling a specific function via a current key signal input. For example, the volume of an audio signal is adjustable if the mobile communication terminal 100 is playing music.

The indicator may include a cursor indicating a position of an input or highlighting an item selection. Indicator movement direction may include straight movement, curved movement, rotational movement, or image movement.

Straight movement refers to the indicator moving straight on the display unit 130. Curved movement refers to the indicator moving along a curve on the display unit 130. Rotational movement refers to the indicator moving along a circumference of a circle having a specific size on the display unit 130. Image movement refers to an image displayed on the display unit 130 being switched from a first image to a second image.

The first key signal may be generated differently based on a direction of the movement. For example, a key signal for a right direction can be generated if a touch-maintained motion is a straight movement from right to left or a rotational movement in a clockwise direction. Although a type of a touch-maintained motion differs according to implementation of the mobile communication terminal 100, the same function may be performed or an opposite function performed.

The key signal for volume adjustment may include a volume-up signal, a volume-down signal, or a volume mute signal. The key signal for data reproduction may include a play signal, a stop signal, a pause signal, a fast play signal, or a backward play signal.

The second key signal may include a numeral key or a character key. The character key may include a key for a foreign character input or a key for a special character input.

The first key signal may vary according to a current input mode despite the same touch position. Furthermore, mobile communication terminal 100 can diversify activation of a touch detection on the touch panel 120 according to a mode setup. For example, a touch for the first key signal generation may be detected if a first mode is set and a touch for the second key signal generation may be detected if a second mode is set. The first mode may be called 'touch wheel mode'.

The control unit 110 may perform the key signal generations. The key signal generations enable display via the display unit 130 of various data stored in the storage unit 140.

One or more light-emitting devices may be arranged on a lower surface of the touch panel 120 of the mobile communication terminal 100. The light-emitting devices may be any device that converts electricity to light, such as a light-emitting diode (LED), a semiconductor laser device, an organic electroluminescence device, and an inorganic electroluminescenc device

A light-emitting device corresponding to a touched position of the touch panel 120 may be activated to emit light. The control unit 110 controls the luminescence.

The light-emitting devices may be arranged in various configurations. For example, the light-emitting devices may be arranged in a matrix or special symbol configuration and the special symbol configuration, such as a circle or a cross.

The touch panel 120 may be formed of a transparent, semi-transparent or non-transparent material. At least one opening may be provided to expose the light-emitting devices provided on the lower surface of the touch panel 120 if the touch panel is formed of a non-transparent material.

The method of the present invention may further include emitting light from the light-emitting devices corresponding to a touched position (S50) if one or more light-emitting devices are arranged on the touch panel 120. The light-emitting devices corresponding to the touched position may emit light in order if a touch maintained motion occurs.

Luminescence may include instantaneous luminescence and/or delayed luminescence. Instantaneous luminescence refers to luminescence that occurs instantaneously such that a user may recognize the luminescence as soon as a touch is made. Delayed luminescence refers to luminescence that occurs after a prescribed duration from a moment of the touch where the prescribed duration is a time perceptible by a user.

The light-emitting device corresponding to the touched position may be the light-emitting device provided at a position closest to the touched position. Therefore, a visual effect may be achieved through instantaneous luminescence as if light occurs along a trace of a pointing device that is moving and may be achieved through delayed luminescence as if light follows a motion of a pointing device.

The touch panel 120 is capable of detecting a pressure applied to a touched position and the control unit 110 is able to illuminate the light-emitting device with brightness proportional to the pressure. Therefore, the light-emitting devices on the display unit 130 instantly shine bright to achieve a visual effect of strong light if a user moves the pointing device on the touch panel 120 with strongly pressure.

The wireless communication unit 160 performs radio frequency processing on a signal for wireless communications. For example, a signal may be modulated into an RF signal for transmission or a received RF signal may be demodulated.

FIG. 3 illustrates light-emitting devices aligned on a touch panel of the mobile communication terminal 100 illustrated in FIG. 2. As illustrated in FIG. 3, a plurality of light-emitting devices 150 are aligned on a touch panel 120 in a circular configuration.

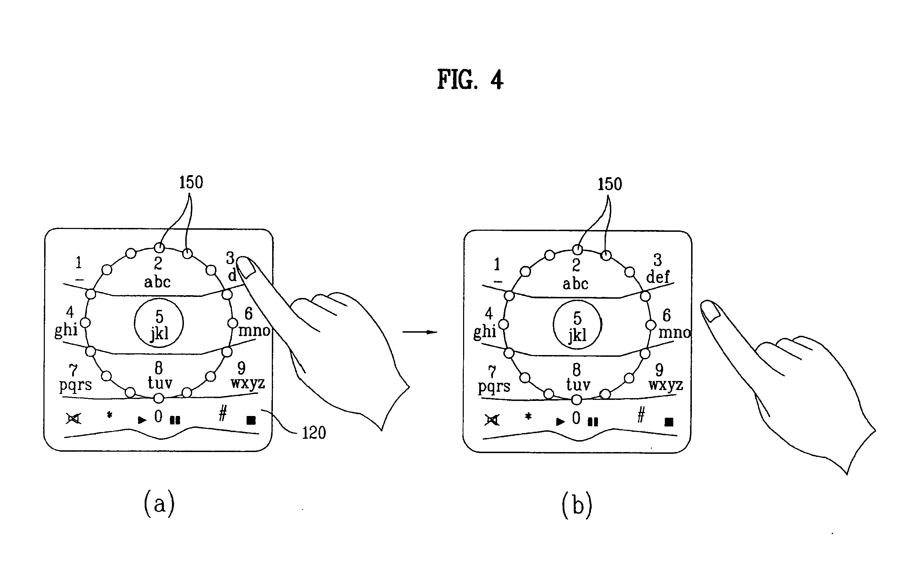

FIG. 4 illustrates inputting a first key signal using the touch panel 120 illustrated in FIG. 3. As illustrated in FIG. 4, a finger first touches a position indicated as '3' (FIG. 4a) and the finger is then separated from the touch panel 120 without moving the touched position (FIG. 4b).

Therefore, the present invention detects the touched position by obtaining 2-dimensional coordinates since touch maintained motion does not occur. The key signal illustrated as touched in FIG. 4a may correspond to a numeral key '3' or one of character keys d, e, and f.

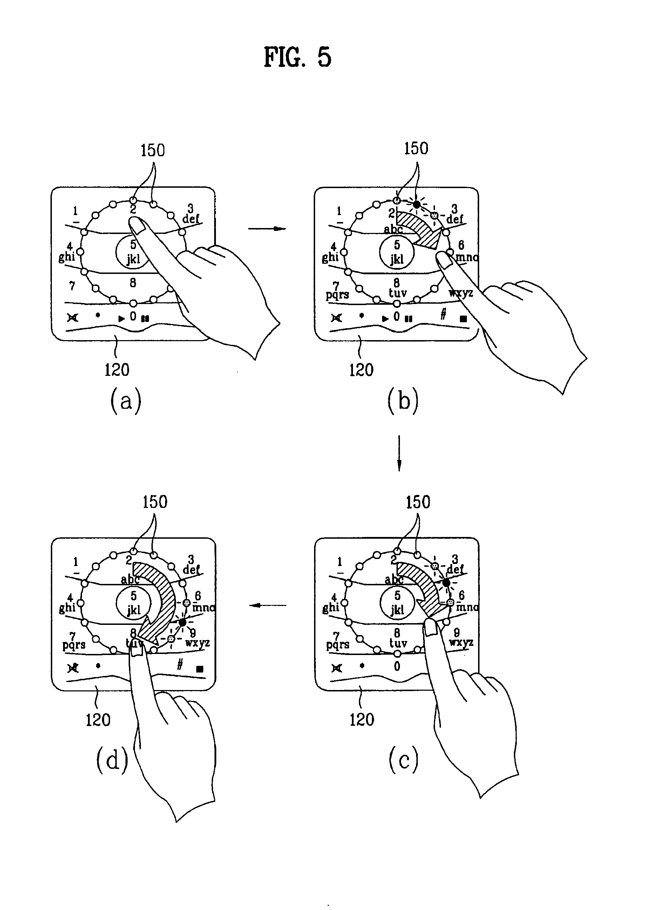

FIG. 5 illustrates inputting a second key signal using the touch panel 120 illustrated in FIG. 3. As illustrated in FIGS. 5(a) to 5(d), a finger touches a specific point and then moves clockwise by maintaining contact with the touch panel 120 with light-emitting devices 150 sequentially illuminated according to a motion of the finger.

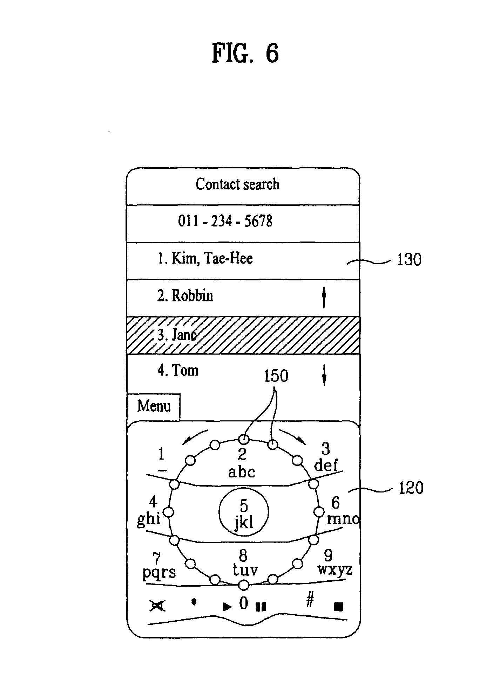

FIG. 6 illustrates a diagram of a screen for inputting a key signal using the touch panel 120 illustrated in FIG. 3, in which moving a position of an indicator, such as highlighting on the display unit 130, is illustrated. As illustrated in FIG. 6, a highlight for an item selection is movable downward to the right if a clockwise direction touch-maintained motion of a pointing device on the touch panel 120 occurs and a highlight for an item selection is movable downward to the left if a counterclockwise direction touch-maintained motion of a pointing device on the touch panel occurs.

On the other hand, the present invention may move a position of an indicator according to a direction of the touch-maintained motion in a different manner. For example, a position of an indicator may move right if a touched position of a pointing device on the touch panel 120 is in a clockwise direction and a position of an indicator may move left if a touched position of a pointing device on the touch panel is in a counterclockwise direction.

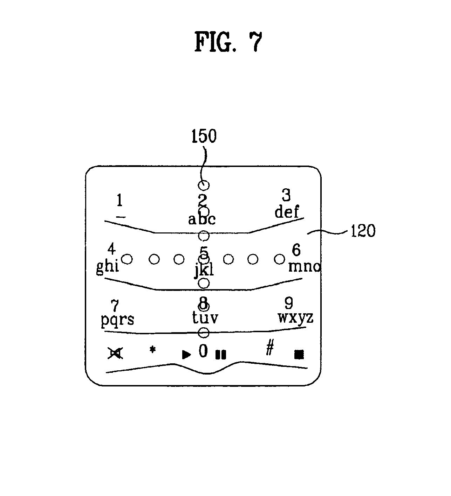

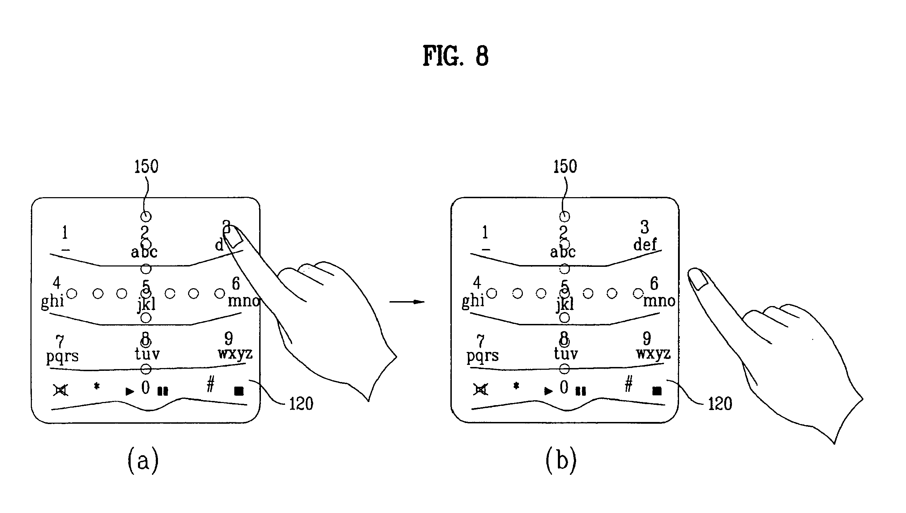

Although the invention has been described with the light-emitting devices 150 aligned on the touch panel 120 in a circular configuration, the light-emitting devices may be aligned in various ways. For example, the light-emitting devices 150 may be aligned on the touch panel 120 in a cross configuration, as illustrated in FIGS. 7 to 10.

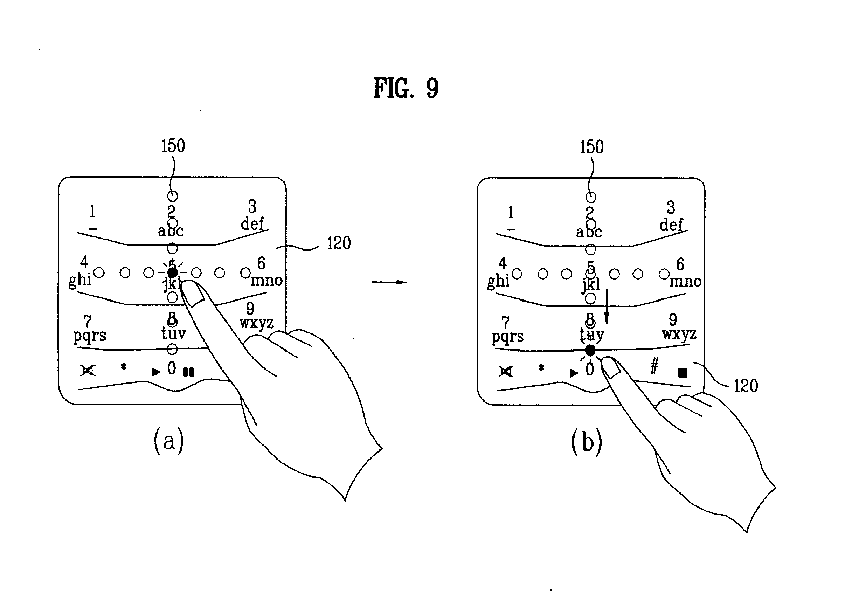

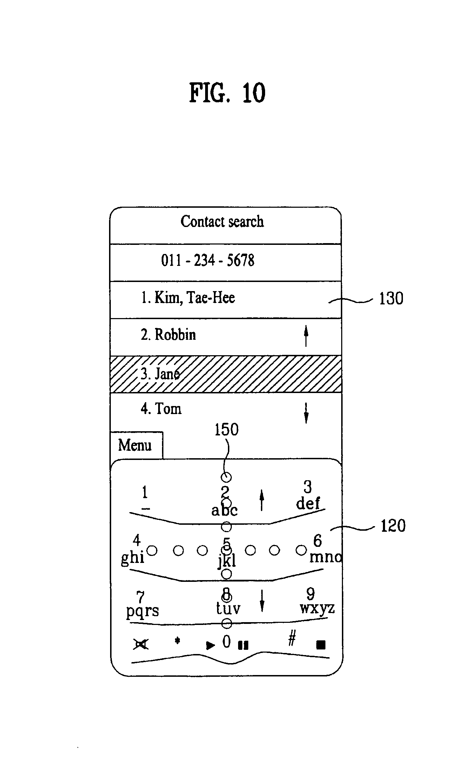

FIG. 9 differs from FIG. 5 in that a direction of a touch-maintained motion from FIG. 9 is 'up' to 'down'. FIG. 10 differs from FIG. 6 in that a touched position of a pointing device on a touch panel 120 in FIG. 10 moves 'up' and 'down'.

The present invention provides several effects or advantages. First, the present invention enables both a function of a touch-type key button and a function of a touch wheel to be performed on one area of a touch panel, thereby implementing an input device with a considerably small area and facilitating a mobile communication terminal having a compact size. Second, light-emitting devices are aligned on a touch panel such that if a light-emitting device corresponding to a touched position is illuminated, a user is able to confirm whether a key signal is correctly input.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims. Therefore, all changes and modifications that fall within the metes and bounds of the claims, or equivalence of such metes and bounds are intended to be embraced by the appended claims.

The foregoing embodiments and advantages are merely exemplary and are not to be construed as limiting the present invention. The present teaching can be readily applied to other types of apparatuses.

The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method of processing a key input in a mobile communication terminal, the method comprising:
receiving a touch on a touch panel; and
processing the received touch as a first input if the received touch comprises movement over the touch panel while maintaining the touch and processing the received touch as a second input if the received touched comprises a non-moving touch to a specific location on the touch panel,
wherein the first input is based on the movement of the received touch and the second input is based on the specific location on the touch panel.

2. The method of claim 1, wherein processing the received touch as the first input comprises generating a first key signal and processing the received touch as the second input comprises generating a second key signal.

3. The method of claim 1, wherein the second input corresponds to a numeral key on the touch panel.

4. The method of claim 1, wherein processing the received touch as the first input comprises at least one of moving an indicator on a display, adjusting volume of an audio signal and reproducing data.

5. The method of claim 4, wherein moving the indicator comprises at least one of moving the indicator in a straight manner, moving the indicator in a curved manner, rotating the indicator, and replacing an existing displayed image with a new image.

6. The method of claim 1, further comprising generating light from a light-emitting device corresponding to a position on the touch panel at which the touch is received.

7. The method of claim 6, further comprising adjusting a brightness of the light-emitting device according to a pressure of the received touch.

8. The method of claim 6, further comprising generating light from a plurality of light-emitting devices if the received touched comprises movement over the touch panel while maintaining the touch, the light generated from the plurality of light-emitting devices in succession according to movement of the received touch.

9. The method of claim 8, wherein generating light from the plurality of light-emitting devices is performed according to at least one of instantaneous luminescence and delayed luminescence.

10. The method of claim 1, further comprising processing the received touch as the first input according to an input mode.

11. The method of claim 1, further comprising processing the received touch as the second input according to an input mode.

12. A mobile communication terminal comprising:
a display unit outputting information;
a touch panel receiving a touch; and
a control unit processing the received touch as a first input if the received touch comprises movement over the touch panel while maintaining the touch and processing the received touch as a second input if the received touched comprises a non-moving touch to a specific location on the touch panel,
wherein the first input is based on the movement of the received touch and the second input is based on the specific location on the touch panel

13. The mobile communication terminal of claim 12, wherein an area on the touch panel for receiving the first input is overlapped with an area on the touch panel for receiving the second input.

14. The mobile communication terminal of claim 12, wherein the control unit processes the first input by generating a first key signal and the control unit processes the second input by generating a second key signal.

15. The mobile communication terminal of claim 12, wherein the second input corresponds to a numeral key on the touch panel.

16. The mobile communication terminal of claim 15, wherein the numeral key also functions as a character key.

17. The mobile communication terminal of claim 15, wherein the control unit processes the received touch as a first input by at least one of moving of an indicator on the display, adjusting volume of an audio signal and reproducing data.

18. The mobile communication terminal of claim 17, wherein the control unit moves the indicator by at least one of a moving the indicator in a straight manner, moving the indicator in a curved manner, rotating the indicator, and replacing an existing displayed image with a new image.

19. The mobile communication terminal of claim 12, further comprising a plurality of light-emitting devices on a lower surface of the touch panel and wherein the control unit generates light from at least one of the plurality of light-emitting devices corresponding to a position on the touch panel at which the touch is received.

20. The mobile communication terminal of claim 19, wherein the control unit adjusts a brightness of the at least one of the plurality of light-emitting devices according to a pressure of the received touch.

21. The mobile communication terminal of claim 20, wherein the control unit sequentially generates light from at least two of the plurality of light-emitting devices according to movement of the received touch if the received touched comprises movement over the touch panel while maintaining the touch.

22. The mobile communication terminal of claim 21, wherein generating light from the at least two of the plurality of light-emitting devices is performed according to at least one of instantaneous luminescence and delayed luminescence.

23. The mobile communication terminal of claim 19, wherein the plurality of light-emitting devices are arranged in one of a circular configuration and a cross configuration.

24. The mobile communication terminal of claim 19, wherein the touch panel comprises a plurality of openings through which the plurality of light-emitting devices are externally exposed.

25. The mobile communication terminal of claim 12, wherein the control unit processes the received touch as the second input according to an input mode.

26. The mobile communication terminal of claim 12, wherein the control unit processes the received touch as the first input according to an input mode.
